Europäisches Patentamt

European Patent Office

Office européen des brevets

(19)

(11) Veröffentlichungsnummer: **0 247 023**
**B1**

(12) **EUROPÄISCHE PATENTSCHRIFT**

(45) Veröffentlichungstag der Patentschrift: **01.08.90**

(21) Anmeldenummer: **87890084.4**

(22) Anmeldetag: **23.04.87**

(51) Int. Cl.$^5$: **H 01 M 6/52**

(54) **Verfahren zum Aufbereiten von gebrauchten Primärzellen.**

(30) Priorität: **23.05.86 AT 1386/86**

(43) Veröffentlichungstag der Anmeldung:
**25.11.87 Patentblatt 87/48**

(45) Bekanntmachung des Hinweises auf die
Patenterteilung:
**01.08.90 Patentblatt 90/31**

(84) Benannte Vertragsstaaten:
**BE CH DE ES FR GB GR IT LI LU NL SE**

(56) Entgegenhaltungen:
**EP-A-0 158 626**
**EP-A-0 158 627**
**DD-A- 210 819**
**DE-A-3 402 196**

**ULLMANNS ENCYKLOPÄDIE DER
TECHNISCHEN CHEMIE, 4. Aufl., Band 2, 1972,
Verlag Chemie, Weinheim/Bergstr., Seiten 20,
21**

(73) Patentinhaber: **VOEST-ALPINE
Aktiengesellschaft
Friedrichstrasse 4
A-1011 Wien (AT)**

(72) Erfinder: **Wallner, Felix, Dipl.-Ing. Dr.
Roseggerstrasse 75
A-4020 Linz (AT)**
Erfinder: **Lugscheider, Walter, Dipl.-Ing. Dr.
Ziegelstrasse 9 L
A-8045 Graz (AT)**
Erfinder: **Odar, Walter, Dipl.-Ing.
Jaritzweg 31
A-8045 Graz (AT)**

(74) Vertreter: **Haffner, Thomas M., Dr. et al
Patentanwaltskanzlei Dipl.-Ing. Adolf
Kretschmer Dr. Thomas M. Haffner
Schottengasse 3a
A-1014 Wien (AT)**

## Beschreibung

Die Erfindung bezieht sich auf ein Verfahren zum Aufbereiten von gebrauchten Primärzellen, insbesondere Gerätebatterien wie Kohle-Zinkbatterien und Alkali-Manganbatterien, bei welchem die Batterien zur Abtrennung von Akkumulatoren und Knopfzellen vorsortiert und mechanisch aufgeschlossen werden.

Bei den bisherigen Versuchen, Primärzellen, aufzuarbeiten, wurden zumeist die Primärzellen zunächst mechanisch oder thermische geöffnet und in der Folge in einem einheitlichen Arbeitsgang, beispielsweise in einem Drehrohrofen, behandelt. Die Verfahrensführung zielte bei den bekannten Verfahren darauf ab, in erster Linie die hochgiftigen Substanzen, beispielsweise Quecksilber, abzutrennen. Die bekanntgewordenen Verfahren waren aber zumeist erste bei Errichtung größerer Anlagen sinnvoll und wirtschaftlich zu betreiben und lediglich für Knopfzellen wurden bereits Vorschläge gemacht, diese in kleineren Anlagen aufzuarbeiten.

Batterien können in Industriebatterien und Geräte- oder Konsumbatterien eingeteilt werden. Industriebatterien umfassen in erster Linie Starter-, Traktions- und stationäre Batterien, wie sie beispielsweise in Notstromanlagen eingesetzt werden. Bei derartigen Batterien handelt es sich zumeist um Blei- und Nickel-Cadmium-Akkumulatoren. Gerätebatterien sind zumeist Primärbatterien, d.h. chemische Energie wird irreversibel in elektrische Energie umgewandelt. Grundsätzlich gibt es neben den genannten Knopfzellen sogenannte Rundzellen, prismatische Zellen und auch Zellen, welche Sonderformen aufweisen. Eine bloße Trennung derartiger Primärbatterien nach ihrer Größe ist nicht ohne weiteres möglich, da die einzelnen Batterietypen in unterschiedlicher Größe gefertigt werden. Mengenmäßig machen Kohle-Zinkbatterien weiterhin etwa 78% der gebrauchten Primärzellen aus. Etwa 19% entfallen auf Alkali-Manganbatterien und Nickel-Cadmium-Akkumulatoren. Lediglich etwa 3% werden von Quecksilberoxyd-Batterien und Blei-Akkumulatoren gebildet. Ein Hauptbestandteil derartiger Batterien ist Braunstein und die Rückgewinnung des Braunsteines ist mit erheblichen Problemen behaftet, wenn dieser Stoff in entsprechender Qualität erhalten werden soll. Der Quecksilbergehalt im Batteriematerial erfordert eine sorgfältige Abtrennung, um nachfolgend zu reinen und bedenkenlos weiterverarbeitbaren Stoffen oder Stoffgemischen zu gelangen.

Die Erfindung zielt nun darauf ab, eine auch in kleineren Anlagen durchführbare Verfahrensführung vorzuschlagen, mit welcher im wesentlichen quecksilberfreier Schrott und hinreichend reine Manganverbindungen hergestellt werden können. Zur Lösung dieser Aufgabe besteht das erfindungsgemäß Verfahren im wesentlichen darin, daß der mechanische Aufschluß unter Verwendung von Prallmühlen und nachfolgender Siebung vorgenommen wird, daß nach einem ersten Mühlendurchgang und nach einer ersten Siebung der Sieüberlauf einer Magnetscheidung zur Abtrennung einer Schrottfraktion unterworfen wird, daß der nach einer ersten Magnetscheidung nicht abgetrennte Teil des Siebüberlaufes gegebenenfalls unter Zwischenschaltung einer zweiten Magnetscheidung einem zweiten Mühlendurchgang in einer Prallmühle unterworfen wird, worauf wiederum gesiebt und magnetische Anteile abgetrennt werden, daß der Siebdurchgang der beiden Siebungen zur Abtrennung von Alkali- und Ammoniumsalzen filtriert und gewaschen wird und hierauf einer thermischen Aufarbeitung unterworfen wird, daß die unmagnetische, mit der jeweils verwendeten Prallmühle, nicht zerkleinerbare Fraktion aus dem Siebüberlauf der beiden Siebungen der thermischen Aufarbeitung zugeführt wird und daß die magnetische Fraktion des Siebüberlaufes der zweiten Siebung gesondert aufgearbeitet wird. Dadurch, daß im Rahmen des erfindungsgemäßen Verfahrens Prallmühlen, wie beispielsweise in Ullmanns Encyklopädie der technischen Chemie, 4. Auflage, Weinheim 1972 in Band 2 auf Seite 20 gezeigt, eingesetzt werden, hat sich erstaunlicherweise gezeigt, daß ein weitgehende Vorsortierung in unterschiedliches Zellenausgangsmaterial vorgenommen werden kann. Mit den zu Beginn des Verfahrens eingesetzten Prallmühlen lassen sich in erster Linie Kohle-Zinkzellen mechanisch zerkleinern und unter Anwendung von Siebung und Magnetscheidung eine Schrottfraktion abtrennen. Die in derartigen Prallmühlen erhaltene feinkörnige Fraktion wird als sogenannte Schwarzmasse bezeichnet und enthält in erster Linie Manganoxyde.

Erfindungsgemäß wird nun der Siebüberlauf einer zweiten Mahlung in einer Prallmühle nach einer Magnetscheidung zur Abtrennung von Shcrott einer weiteren Magnetscheidung zur Abtrennung eines magnetischen, mit der jeweils verwendeten Prallmühle, nicht zerkleinerbaren Materials, unterworfen. Diese Fraktion wird nun im Rahmen der vorliegenden Erfindung gesondert aufgearbeitet und enthält in erster Linie Batterien, welche von den beiden ersten Prallmühlen nicht mechanisch aufgeschlossen werden konnten. Zu derartigen Batterien zählen die Alkali-Manganzellen, welche von der mechanischen Vorzerkleinerung in den beiden Prallmühlen noch nicht zerkleinert wurden und auf diese Weise einer gesonderten Aufarbeitung unterworfen werden können. Der Einsatz von Prallmühlen und Siebungen sowie Magnetscheidungen führt somit neben einer Schwarzmassefraktion und einer Schrottfraktion zu einer dritten magnetischen und nicht Schrottfraktion zu einer dritten magnetischen und nicht zerkleinerbaren Fraktion, welche eine deutliche Anreicherung an Alkali-Manganzellen aufweist, wobei der Siebüberlauf der zweiten Siebung, welcher durch magnetische Abtrennungen nicht entfernt werden konnte, als unmagnetische, nicht zerkleinerbare Fraktion an geeigneter Stelle in die Aufarbeitungslinie für die Schwarzmasse eingespeist werden kann.

Zur Abtrennung von Schrott ist es vorteilhaft, die jeweils erste Magnetschiedung mit Überbandmagnetscheidern vorzunehmen, wodurch entsprechend große magnetische Teile sicher entfernt werden können. Die durch derartige Überbandmagnetscheider nicht abtrennbaren magnetischen Materialien können in der Folge in nachgeschalteten zweiten Magnetscheidern abgetrennt werden, welche mit Vorteil als Trommelmagnetscheider ausgebildet sind. Bei dem in Trommelmagnetscheidern abgetrennten und magnetischen Material handelt es sich aber nun nicht mehr ausschließlich um Schrott, sondern auch um an magnetischen Materialien noch anhaftende Bestandteil, so daß die durch Trommelmagnetscheider abgetrennten Substanzen mit Vorteil gesondert aufgearbeitet werden.

Unter Verwendung von Überbandmagnetscheidern und Trommelmagnetscheidern läßt sich mit Vorteil der Siebüberlauf der zweiten Siebung zunächst einer ersten Magnetscheidung unter Abtrennung einer Schrottfraktion und einer zweiten Magnetscheidung zur Abtrennung einer magnetischen, nicht zerkleinerbaren Fraktion, unterwerfen, wobei mit Vorteil aus dem Siebüberlauf der ersten Siebung nur der magnetisch abtrennbare Teil der zweiten Magnetscheidung dem zweiten Mühlendurchgang zugeführt wird. Der magnetisch abtrennbare Teil des Sieüberlaufes der ersten Siebung bildet eine unmagnetische, nicht zerkleinerbare Fraktion, welche in erster Linie aus Schwarzmasse, ungeöffneten Zellen, Papier und Kunstoff zusammengesetzt ist. Wegen ihres hohen Papier- und Kunststoffanteiles kann diese Fraktion ohne Vorreinigung unmittelbar einer thermischen Aufarbeitung im Zuge der Aufarbeitung der Schwarzmasse zugeführt werden.

Für die nachfolgende Aufarbeitung von Schwarzmasse wird mit Vorteil die Siebung so vorgenommen, daß sie zur Abtrennung einer Korngröße von <5 mm in Siebdurchgang durchgeführt wird.

Die mangetische, nicht zerkleinerbare Fraktion, welche in erster Linie Alkali-Manganbatterien ohne Umhüllung enthält, wird mit Vorteil so aufgearbeitet, daß diese einer Schneidmühle und anschließend einem dritten Mühlendurchgang in einer Prallmühle unterworfen wird, worauf gegebenenfalls nach einer thermischen Behandlung mit Temperaturen von max. 318°C und einer weiteren Mahlung eine weitere Siebung oder eine weitere Magnetscheidung vorgenommen wird und der Siebdurchgang bzw. die unmagnetische Fraktion dem Siebdurchgang der ersten und der zweiten Siebung zur Abtrennung von Alkali- und Ammoniumsalzen zugeführt wird. Die Anreicherung von Alkali-Manganzellen in einer Fraktion stellt einen besonderen Vorteil dar, da dieser Zellentyp qualitativ hochwertige Materialien enthält, und die aus derartigen Zellen rückgewinnbaren Stoffkomponenten im Vergleich zu Kohle-Zinkzellen wesentliche geringere Verunreinigungen aufweisen. Die Trennung von Stahlbechern und Zelleninhalt erfolgt hiebei mechanisch oder thermisch-mechanisch, wobei die Wahl der Obergrenze für die Temperatur der thermischen Behandlung mit maximal 318°C im Hinblick darauf gewählt wurde, daß ein Ausschmelzen von Kalilauge vermieden werden solle. Der Getrocknete Zelleninhalt läßt sich durch Prallbeanspruchung aus einem Stahlbecher entfernen, wobei Schwarzmasse und Schrott durch Siebung mit einer Maschenweite von 5 mm oder Magnetscheidung getrennt werden können.

Die Schrottfraktion kann in einfacher Weise dadurch weitergerinigt werden, daß diese einem thermischen Aufschluß in einem Drehrohrofen bei Temperaturen zwischen 500 und 900°C, insbesondere 700°C, unterworfen wird, wobei Quecksilber und Zink abgetrennt werden, worauf gegenenfalls nach einer Mahlung, Siebung oder Magnetscheidung ein quecksilberfreier Schrott ausgetragen wird. Die Schrottfraktion, welche durch die Überbandmagnetscheider abgetrennt wurde, enthält aber nun neben dem Blechschrott auch Alkali-Mangan- und Kohle-Zink-zellen und auch reiner Blechschrott enthält immer noch 30 ppm Quecksilber. Durch den Schwarzmasseanteil liegt der Quecksilberanteil zumeist über einem Zehntal Prozent. Durch die Quecksilberabdampfung, welche im Drehrohrofen bei etwa 700°C erfolgt, kann anschließend nach einem Mühlendurchlauf und einer Siebung oder Magnetscheidung Schwarzmasse vom Blechschrott getrennt werden, wobei der Quecksilbergehalt des Blechschrottes unter 10 ppm gesenkt werden kann.

Die vierte Fraktion, welche im wesentlichen von Schwarzmasse gebildet wird und eine Korngröße von <5 mm aufweist, enthält im wesentlichen Maganoxyd, Zinkoxyd und Zinkchlorid sowie als Nebenbestandteil Eisen, Graphit, Kunststoff, $SiO_2$, Kalilauge, Ammoniumchlorid und als Nebenbestandteile in geringeren Menge Quecksilber, Ruß, Kupfer, Aluminium, Nickel und Cadmium. Diese Schwarzmassefraktion wird zunächst einer Abtrennung der Alkali- und Ammonimsalz unterworfen, wobei diese Abtrennung bei neutralem bis leicht alkalischem pH-Wert durch Filtration erfolgen kann, worauf der Rückstand neutral gewaschen wird. Je nach Anteil der Schwarzmasse aus Alkali-Manganzellen muß mit Säure, insbesondere Salzsäure, neutralisiert werden. Die Abtrennung von Kaliumhydroxyd ist hiebei von besonderer Bedeutung, da dieses im Drehrohrofen verstärke Ansatzbildung verursachen würde und damit die Zinkabtrennung und den weiteren Betrieb negativ beeinflussen würde. Die Qualität von elektrochemisch hergeselltem Braunstein würde durch Alkali- und Ammoniumionen vermindert.

In vorteilhafter Weise wird nun die von Alkali- und Ammoniumsalzen befreite Fraktion mit einer maximalen Korngröße von 5 mm, gegebenenfalls nach einem Vortrocknen bei Temperaturen zwischen 105° und 130°C einem Drehrohrofen zur thermischen Behandlung bei 500 bis 900°C unter oxydierender Atmosphäre zugeführt, worauf gegebenenfalls nach einer Nachverbrennung der Pyrolysegase eine Staubabtrennung bei einer Temperatur von über 357°C vorgenommen wird und anschließend aus der Gasphase durch Abkühlen Quecksilber kondensiert wird. Die Vortrocknung, wird, in erster Linie wegen des Kunststoffanteiles, bei vergleichweise geringen Temperaturen durchgeführt, um eine übermäßiges Zusammebacken der schmelzenden Kunststoffanteil zu vermeiden. Im Drehrohrofen wird unter Anwendung oxydierender Atmosphäre bei ca. 700°C Quecksilber abgedampft. Der Quecksilbergehalt sinkt auf diese Weise von einigen Zehntel Prozent auf unter 10 ppm. Die im indirekt beheizten Drehrohrofen entstehenden Gase können einer Nachverbrennung zugeführt werden, wobei mit dem Gasstrom mitgeführte Stäube in einem Zyklon oder Elektrostaubfilter abgeschiedenen werden. Die Betriebstemperatur im Zyklon oder Elektrostaubfilter muß über 357°C liegen, um eine Kondensation von Quecksilber zu vermeiden. Quecksilber wird in einem nachgeschalteten Kondensator, der beispielsweise die Gastemperatur auf 5°C absenkt, rückgewonnen.

Die Abtrennung des Zinks aus der Schwarzmasse erfolgt mit Vorteil pyrometallurgisch in einem Wälzverfahren. Mit Vorteil wird hiezu so vorgegangen, daß das vorgetrocknete, feinkörnige Material, gegebenenfalls nach der thermischen Behandlung unter oxydierender Atmosphäre und unter Zusatz von ausgetragenem Staub aus dieser thermischen Behandlung pelletiert bzw. granuliert wird und einer zweiten thermischen Behandlung unter reduzierender Atmosphäre, insbesondere unter Zugabe von Koks, bei Temperaturen zwischen 1000° und 1250°C unterworfen wird, wobei Zink und gegebenenfalls Quecksilber abgetrennt werden. Die Granulierung des Materials vor dem Einsatz in dem Wälzverfahren vermindert zu starken Materialaustrag der feinkörnigen Schwarzmasse mit den Abgasen, wobei die Körnung bei der Granulierung mit Vorteil wiederum auf etwa 5 mm eingestellt wird.

Die dieser zweiten thermischen Behandlung zuzuführende Charge wird mit Vorteil durch Zugabe von CaO zur Einstellung eines Verhältnisses von CaO+MgO/SiO$_2$ von 1,3 bis 3, unter Berücksichtigung des SiO$_2$-Gehaltes des Kokszusatzes eingestellt, wodurch das Zinkausbringen erhöht werden kann.

Die Aufgabe in den Drehrohrofen kann kontinuierlich erfolgen, wobei mit Vorteil etwa 20 bis 25% Koks zugesetzt werden. Der Einsatz durchwandert den Drehrohrofen im Gegenstrom zu den Rauchgasen einer am Austragsende installierten Zusatzbeheizung, wobei vorzugsweise eine Materialtemperatur bis max. 1250°C bei einer mittleren Verweilzeit von 1 h eingestellt wird. Hiebie wird Zink reduziert und verdampft, worauf es aus der Beschickung in den freiem Ofenraum austritt und unter Energieabgabe zu Zinkoxyde rückreagiert. Arsen, Antimon, Blei und Cadmium können bei gleichen Bedingungen aus der Schwarzmasse entfernt werden und stellen deshalb für die weitere Verwendung des Mangankonzentrats zur Braunsteinherstellung keine weiteren Probleme dar. Auch Eisen, Kupfer und Nickel können ebenfalls reduziert werden, verlüchtigen sich jedoch im Zuge dieses Verfahrenschrittes nicht.

Auch eine Reduktion des Mangans kann bei diesen Temperaturen stattfinden, ist jedoch nicht erwünscht, da sie einen Energieverbrauch darstellt. Die Reaktion ist stark endotherm und kann bei 1250°C, beispeilsweise bei Sauerstoffpartialdruck von $10^{-19}$ bar und einem Verhältnis von CO:CO$_2$ von $10^{-4,5}:1$ stattfinden. Das im freien Ofenraum entstehende Zinkoxyd wird mit den Ofenabgasen ausgetragen. In einem nachgeschalteten Zyklon können mitgerissene Materialteilchen abgeschieden werden und dem Prozeß rückgeführt werden. Nach Abkühlung und Konditionierung des Gases mit Wasserdampf kann das Zinkoxyd bei ca. 300°C mit einem elektrostatischen Filter abgeschieden werden. Quecksilber und Zink können jedoch auch in einem gemeinsamen Prozeßschritt aus der Schwarzmasse abgetrennt werden, wodurch sich geringere Anlagenkosten ergeben. Die Erwärmung des Gutes erfolgt in diesem Falle auf 1200°C in einem Prozeßschritt, wobei eine Nachverbrennung entfällt. Die Betriebsbedingungen des Drehrohrofens können im wesentlichen gleichgehalten werden, jedoch muß das elektrostatische Filter in diesen Fällen zur Zinkoxydabscheidung eine Mindesttemperatur von 357°C aufweisen, worauf die Abscheidung des Quecksilbers durch Kondensation mit nachgeschalteter Abgasfeinreinigung vorgenommen wird.

Mit Vorteil wird nach der zweiten thermischen Behandlung unter Inertgasatmosphär gekühlt, und gegebenenfalls nach einer Siebung und Zerkleinerung auf Korngrößen von max. 0,3 mm eine Magnetscheidung vorgenommen. Die Abkühlung des entzinkten Materials kann heibei unter Stickstoff- oder Kohlendioxidatmosphäre als Inertgasatmosphäre vorgenommen werden, wobei die Abkühlung auf etwa 100°C erfolgt, um eine Rückoxydation von Manganoxyd, Eisen, Kupfer etc. zu vermindern. Mit der anschließenden Zerkleinerung auf mindestens 0,3 mm und Magnetscheidung soll der Großteil des metallisch vorliegenden Eisens und auch teilweise Kupfer abgetrennt werden.

Eine weitere Reinigung kann dadurch vorgenommen werden, daß die magnetisch nicht abtrennbare Substanz in neutrale oder schwach sauer Lösung gebracht wird und hierauf gefiltert wird. Calciumoxid muß hierbei mit Schwefelsäure neutralisiert werden. Alkalisalze, Zink und Eisen werden teilweise gelöst und können abfiltriert werden.

Das verbeliebende Manganoxyd kann in der Folge mit Schwefelsäure gelöst werden, wobei diese Lösung von ungelösten Bestandteilen wie CaSO$_4$, SiO$_2$ und Kohlenstoff, beispielsweise durch Filtration getrennt werden kann.

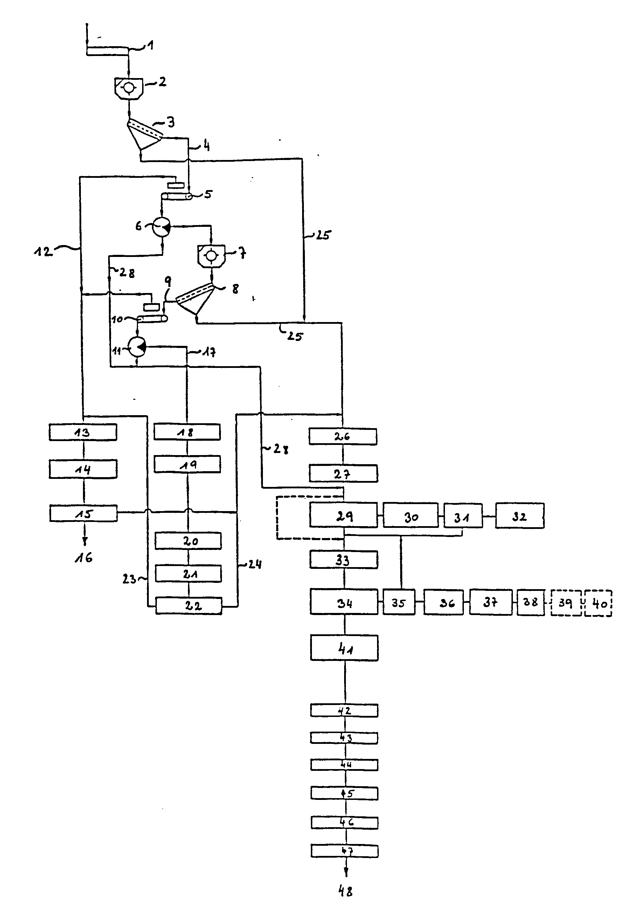

Das Verfahren zum Aufbereiten von gebrauchten Primärzellen wird an Hand der Zeichnung beschrieben, die ein Flußdiagramm, in dem auch Vorrichtungsteile schematisch angedeutet sind, zeigt. Die gesammelten Batterien 1 werden, nachdem sie in Akkumulatoren und Knopfzellen vorsortiert wurden, einer ersten Prallmühle 2 zugeführt und das in der Prallmühle 2 vorgemahlene Material auf ein erstes Sieb 2 aufgebracht. Der Siebüblerlauf 4 des Siebes 3 wird einer ersten Magnetscheidung auf einem Überbandmagnetscheider 5 unterworfen. Der dabei nicht abgetrennte Teil des Siebüberlaufes 4 wird nach einer zweiten Magnetscheidung in einem Trommelmagnetscheider 6 ein zweites Mal in einer Prallmühle 7 gemahlen, worauf bei 8 ein zweites Mal gesiebt wird und der Siebüberlauf 9 zur Entfernung verbleibender magnetischer Bestandteile über die Magnetscheider 10 und 11 geführt wird.

Die mit dem Überbandmagnetscheidern 5 und 10 abtrennbare Schrottfraktion 12 wird anschließend in dem Drehrohrofen 13 thermisch aufgeschlossen. Der aus dem Ofen 13 ausgetragene Schrottanteil wird in einer Prallmühle 14 gemahlen, noch einmal gesiebt oder über einen Magnetscheider 15 geführt, worauf bei 16 quecksilber- und zinkfreier Schrott anfällt.

Die mit den Trommelmagnetscheidern 6 und 11 abgetrennte magnetische, mit den verwendeten Prallmühlen nicht zerkleinerbare Fraktion 17 wird erst in einer Scheidmühle 18 und anschließend einem dritten Mühlendurchgang durch eine Prallmühle 19 unterworfen. Die zerkleinerte Fraktion 17 wird nach einer thermischen Behandlung in dem Drehrohrofen 20 noch einmal in der Mühle 21 gemahlen und einer Siebung bzw. Magnetscheidung 22 unterzogen. Die bei der Magnetscheidung 22 abgetrennten Schrottanteil 23 werden zusammen mit der Schrottfraktion 12 aufgearbeitet.

Die zurückbleibende Schwarzmasse 24 wird zusammen mit der bei der Magnetscheidung 15 abgetrennten Schwarzmasse der aus den Siebdurchgängen der Siebe 3 und 8 anfallenden Schwarzmasse 25 zugeführt.

Aus der Schwarzmassefraktion 25 werden in dem Filter 26 die Alkali- und Ammoniumsalze abgetrennt. Der Rückstand wird nach einer Neutralisation bei 27 vorgetrocknet. Dieser vorgetrockneten Fraktion werden die aus den Trommelmagnetschiedern 6 und 11 anfallenden unmagnetischen mit der verwendeten Prallmühle nicht zerkleinerbaren Fraktionen 28 zugesetzt. Diese vereinigten Fraktionen werden in dem Drehrohrofen 29 in oxidierender Atmosphäre pyrolysiert, wobei die entstehenden Pyrolsegase bei 30 nachverbrannt werden können. Die mit dem Gasstrom mitgeführten Stäube werden in dem nachgeschalteten Zyklon 31 abgeschieden und das in Drehrohrofen 29 abgedampfte Quecksilber wird in den Kondensator 32 wieder verlüssigt und ausgetragen.

Die Abtrennung von Zink aus der Schwarzmasse erfolgt durch thermische Behandlung eines bei 33 hergestellten Granulates, in reduzierender Atmosphäre in dem Dehrohrofen 34. Mitgerissene Materialteilchen werden nach dem Drehrohrofen 34 in einem Zyklon 35 abgetrennt und können dem Prozeß rückgeführt werden. Nach Abkühlung 36 und Konditionierung 37 des Gases erfolgt die Zinkoxidabscheidung in dem elektromagnetischen Filter 38. Wenn die Abscheidung von Zink und Quecksilber aus der Schwarzmasse in einem einzigen Arbeitsschritt erfolgen wird nach der Zinkoxidabscheidung das Quecksilber bei 39 kondensiert und nachfolgend eine Abgasfeinreinigung 40 vorgenommen.

Zur Abtrennung der in dem Rückstand aus der zweiten thermischen Behandlung nach vorhandenen Metalle, erfolgt ein Abkühlungsschritt 41 unter Inertgasatmosphäre, worauf das Material bei 42 neuerlich zerkleinert und einer weiteren Magnetabscheidung 43 unterzogen wird, wobei vor allem noch vorhandenes Eisen abgetrennt wird.

Zur weiteren Reinigung werden die nicht magnetisch abtrennbaren Substanzen gelöst 44 und anschließend die in neutralem oder schwach saurem Milieu nicht löslichen Substanzen auf dem Filter 45 abgetrennt. Mit Schwefelsäure wird das $MnO_2$ aufgelöst 46, auf dem Filter 47 die in starken Säuren unlöslichen Bestandteilen abgetrennt und Mangansulfat bei 48 ausgetragen.

**Patentansprüche**

1. Verfahren zum Aufbereiten von gebrauchten Primärzellen, insbesondere Gerätbatterien wie Kohle-Zinkbatterien und Alkali-Manganbatterien, bei welchem die Batterien zur Abtrennung von Akkumlatoren und Knopfzellen vorsortiert und mechanisch aufgeschlossen werden, dadurch gekennzeichnet, daß der mechanische Aufschluß unter Verwendung von Prallmühlen (2, 7) und nachfolgender Siebung (3, 8) vorgenommen wird, daß nach einem ersten Mühlendurchgang und nach einer ersten Siebung der Siebüberlauf (4) einer Magnetscheidung (5) zur Abtrennung einer Schrottfraktion unterworfen wird, daß der nach einer ersten Magnetscheidung (5) nicht abgetrennte Teil des Siebüberlaufes gegebenenfalls unter Zwischenschaltung einer zweiten Magnetscheidung (6) einem zweiten Mühlendurchgang in einer Prallmühle (7) unterworfen wird, worauf wiederum gesiebt und magnetische Anteile abgetrennt werden, daß der Siebdurchgang (25) der beiden Siebungen (3, 8) zur Abtrennung von Alkali- und Ammoniumsalzen filtriert und gewaschen wird und hierauf einer thermischen Aufarbeitung (29) unterworfen wird, daß die unmagnetische, mit der jeweils verwendeten Prallmühle, nicht zerkleinerbare Fraktion aus dem Siebüberlauf (9) der beiden Siebungen (3, 8) der thermischen Aufarbeitung (29) zugeführt wird und daß die magnetische Fraktion (12, 17) des Siebüberlaufes (9) der zweiten Siebung (8) gesondert aufgearbeitet wird.

2. Verfahren nach Anspruch 1, dadurch gekennzeichnet, daß der Siebüberlauf (9) der zweiten Siebung (8) zunächst einer ersten Magnetscheidung (10) unter Abtrennung einer Schrottfraktion (12) und einer zweiten Magnetscheidung (11) zur Abtrennung einer magnetischen, mit der jeweils verwendeten Prallmühle (7), nicht zerkleinerbaren Fraktion, zugeführt wird.

3. Verfahren nach Anspruch 1 oder 2, dadurch gekennzeichnet, daß die jeweils erste Magnetscheidung mit Überbandmagnetscheidern (5, 10) und die jeweils zweite Magnetscheidung mit Trommelmagnetscheidern (6, 11) vorgenommen wird.

4. Verfahren nach Anspruch 1, 2 oder 3, dadurch gekennzeichnet, daß aus dem Siebüberlauf (4) der ersten Siebung (3) nur der magnetisch abtrennbare Teil der zweiten Magnetscheidung (6) dem zweiten Mühlendurchgang (7) zugeführt wird.

5. Verfahren nach einem der Ansprüche 1 bis 4, dadurch gekennzeichnet, daß die Siebung (3, 8) zur Abtrennung einer Korngröße von <5 mm im Siebdurchgang durchgeführt wird.

6. Verfahren nach einem der Ansprüche 1 bis 5, dadurch gekennzeichnet, daß die magnetische, durch eine erste Magnetscheidung (10) nicht abgetrennte Fraktion des Siebüberlaufes (9) der zweiten Siebung (8) einer Schneidmühle (18) und anschließend einem dritten Mühlendurchgang in einer Prallmühle (19) unterworfen wird, worauf gegebenenfalls nach einer thermischen Behandlung (20) bei Temperaturen von max. 315°C und einer weiteren Mahlung (21) eine weitere Siebung oder eine weitere Magnetscheidung (22) vorgenommen wird und der Siebdurchgang (24) bzw. die unmagnetische Fraktion dem Siebdurchgang (25) der ersten und der zweiten Siebung (3, 8) zur Abtrennung von Alkali- und Ammoniumsalzen zugeführt wird.

7. Verfahren nach einem der Ansprüche 1 bis 6, dadurch gekennzeichnet, daß die Schrottfraktion (12) einem thermischen Aufschluß in einem Drehrohrofen (13) bei Temperaturen zwischen 500° und 900°C, insbesondere 700°C, unterworfen wird, wobei Quecksilber und Zink abgetrennt werden, worauf gegebenenfalls nach einer Mahlung (14) Siebung oder Magnetscheidung (15) ein quecksilberfreier Schrott ausgetragen wird.

8. Verfahren nach einem der Ansprüche 1 bis 7, dadurch gekennzeichnet, daß die von Alkali- und Ammoniumsalzen befreite Fraktion mit einer maximalen Korngröße von 5 mm, gegebenenfalls nach einem Vortrocknen (27) bei Temperaturen zwischen 105° und 130°C einem Drehrohrofen (28) zur thermischen Behandlung bei 500 bis 900°C unter oxydierender Atmosphäre zugeführt wird, worauf gegebenenfalls nach einer Nachverbrennung (30) der Pyrolysegase eine Staubabtrennung (30) bei einer Temperatur von über 357°C vorgenommen wird und anschließend aus der Gasphase durch Abkühlen (32) Quecksilber kondensiert wird.

9. Verfahren nach einem der Ansprüche 1 bis 8, dadurch gekennzeichnet, daß das vorgetrocknete, feinkörnige Material gegebenenfalls nach der thermischen Behandlung (29) unter oxydierender Atmosphäre und unter Zusatz von ausgetragenem Staub aus dieser thermischen Behandlung pelletiert bzw. granuliert wird und einer zweiten thermischen Behandlung (34) unter reduzierender Atmosphäre, insbesondere unter Zugabe von Koks, bei Temperaturen zwischen 1000° und 1250°C unterworfen wird, wobei Zink und gegebenenfalls Quecksilber abgetrennt werden.

10. Verfahren nach Anspruch 9, dadurch gekennzeichnet, daß die der zweiten thermischen Behandlung (34) zuzuführende Charge durch Zugabe von CaO das Verhältnis von CaO+MgO/ $SiO_2$ auf 1,3 bis 3 unter Berücksichtigung des $SiO_2$-Gehaltes des Kokszusatzes eingestellt wird.

11. Verfahren nach Anspruch 9 bis 10, dadurch gekennzeichnet, daß nach der zweiten thermischen Behandlung (34) unter Inertgas gekühlt wird und gegebenenfalls das behandelte Gut nach einer Siebung und Zerkleinerung (42) auf Korngrößen von max. 0,3 mm einer Magnetscheidung (43) zugeführt wird.

12. Verfahren nach Anspruch 11, dadurch gekennzeichnet, daß die magnetisch nicht abtrennbare Substanz in eine neutrale oder schwach sauer Lösung gebracht wird und hierauf gefiltert wird.

13. Verfahren nach einem der Ansprüche 1 bis 12, dadurch gekennzeichnet, daß verbleibendes Mn-oxid mit $H_2SO_4$ gelöst wird und diese Lösung von ungelösten Bestandteilen wie $CaSO_4$, $SiO_2$ und Kohlenstoff getrennt wird.

**Revendications**

1. Procédé pour la récupération d'éléments primaires usagés, notamment de batteries d'appareils comme des batteries carbone-zinc et des batteries alcali-manganèse selon lequel les batteries sont prétriées pour une séparation entre accumulateurs et piles rondes et sont désagrégées mécaniquement, caractérisé en ce que la désagrégation mécanique este effectuée en utilisant des broyeurs à percussion (2, 7) et un criblage ultérieur (3, 8), en ce que, après un premier passage en broyeur et après un premier criblage, le refus de crible (4) est soumis à une séparation magnétique (5) pour la séparation d'une fraction de déchets, en ce que la partie du refus de crible qui n'a pas été séparée après une première séparation magnétique (5) est soumise, le cas échéant avec interposition d'une seconde séparation magnétique (6) à un second passage dans un broyeur à percussion (7) et ensuite elle est à nouveau criblée et les parties magnétiques sont séparées, en ce que le passant de crible (25) obtenu après les deux opérations de criblage (3, 8) est filtré et lavé pour la séparation des sels d'alcali et d'ammonium et est ensuite soumis à un traitement thermique (29), en ce que la fraction non magnétique, provenant du refus (9) des deux opérations de criblage (3, 8) et qui n'a pas pu être désagrégée avec le broyeur à percussion respectivement utilisé, est soumise au traitement thermique (29) et en ce que la fraction magnétique (12, 17) du refus (9) de la seconde opération de criblabe (8) est traitée séparément.

2. Procédé selon la revendication 1, caractérisé en ce que le refus (9) de la seconde opération de criblage (8) est soumis initialement à une première séparation magnétique (10), avec séparation d'une fraction de déchets (12) et à une seconde séparation magnétique (11) pour la séparation d'une fraction magnetique ne pouvant pas être désagrégée avec le broyeur à percussion (7) respectivement utilisé.

3. Procédé selon la revendication 1 ou 2, caractérisé en ce que la première séparation magnétique respective est effectuée avec des séparateurs magnétiques (5, 10) à bande supérieure de présentation et la seconde séparation magnétique respective est effectuée avec des séparateurs magnétiques (6, 11) à tambours.

4. Procédé selon la revendication 1, 2 ou 3, caractérisé en ce que, à partir du refus de crible (4) obtenu dans la première opération de criblage (3), seulement la partie magnétiquement séparable provenant de la seconde opération de séparation magnétique (6) est introduite dans le second passage de broyeur (7).

5. Procédé selon une des revendications 1 à 4, caractérisé en ce que le criblage (3, 8) est effectué en vue de la séparation d'un grosseur de grains inférieure à 5 mm dans le passant de crible.

6. Procédé selon une des revendications 1 à 5, caractérisé en ce que la fraction magnétique, non séparée par un première séparation magnétique (10), du refus de crible (9) de la seconde opération de criblage (8) est introduite dans un broyeur à découpage (18) et est ensuite soumise à une troisième opération de broyage dans un broyeur à percussion (19) puis le cas échéant après un traitement thermique (20) à des températures de 315°C au maximum et un autre broyage (21), elle est soumise à un autre criblage ou à une autre séparation magnétique (22) et le passant de crible (24) ou bien la fraction non magnétique est amenée dans le passant de crible (25) provenant de la première et de la seconde opération de criblage (3, 8) en vue de la séparation de sels d'alcali et d'ammonium.

7. Procédé selon une des revendications 1 à 6, caractérisé en ce que la fraction de déchets (12) est soumise à une désagrégation thermique dans un four tubulaire rotatif (13) à des températures comprises entre 500° et 900°C, où du mercure et du zinc sont séparés, et ensuite, le cas échéant après un broyage (14), un criblage ou un séparation magnétique (15) des déchets exempts de mercure sont déchargés.

8. Procédé selon une des revendications 1 à 7, caractérisé en ce que la fraction libérée des sels d'alcali et d'ammonium, ayant une grosseur maximale de grains de 5 mm, est introduite, le cas échéaant après un préséchage (27) à des températures comprises entre 105° et 130°C, dans un four tubulaire rotatif (28) pour un traitement thermique à 500 à 900°C dans une atmosphère oxydante et ensuite, le cas échéant après une postcombustion (30) du gaz de pyrolise, une séparation de poussières (30) est effectuée à une température supérieure à 357°C puis de mercure est condensé à partir de la phase gazeuse par refroidissement (32).

9. Procédé selon une des revnedications 1 à 8, caractérisé en ce que la matière préséchée à grains fins est soumise, le cas échéant après le traitement thermique (29) dans une atmosphère oxydante et avec addition des poussières obtenues à partir de ce traitement thermique, à une transformation en boulettes ou en granules ainsi qu'à un second traitement thermique (34) dans une atmosphère réductrice, notamment avec addition de coke, à des températures entre 1000° et 1250°C, du zinc et le cas échéant du mercure étant alors séparés.

10. Procédé selon la revendication 9, caractérisé en ce que, pour la charge à soumettre au second traitement thermique (34), on régle, par addition de CaO, le rapport de $CaO+MgO/SiO_2$ entre 1, 3 et 3 en tenant compte de la teneur en $SiO_2$ du coke ajouté.

11. Procédé selon les revendications 9 et 10, caractérisé en ce que, après le second traitement thermique (34), on effectue un refroidissement en gaz inerte et le cas échéant le produit traité est soumis, après un criblage et une désagrégation (42) à des grosseurs de grains au maximum de 0,3 mm, à une séparation magnétique (43).

12. Procédé selon la revendication 11, caractérisé en ce que la substance non séparable magnétiquement est amenée sous forme d'une solution neutre ou faiblement acide et elle est filtrée à partir de celle-ci.

13. Procédé selon une des revendications 1 à 12, caractérisé en ce que l'oxyde de Mn substitant est dissous avec $H_2SO_4$ et cette solution est séparée de composants non dissous comme $CaSO_4$, $SiO_2$ et du carbone.

## Claims

1. A process for reprocessing spent primary cells, in particular appliance batteries, such as carbon-zinc batteries and alkali-manganese batteries, in which the batteries are previously sorted to separate accumulators, and button cells and mechanically broken up, characterised in that the mechanical breaking-up is effected using impact mills (2, 7) and subsequent screening (3, 8), in that after an initial mill passage and after an initial screening the scren overflow (4) undergoes a magnetic separation (5) so as to separate a scrap function, in that the portion of the screen overflow not separated after an initial magnetic separation (5) undergoes a second mill passage through an impact mill (7), optionally via a second magnetic separation (6), whereupon screening is again carried out and magnetic constituents are separated, in that the material (25) which has passed through both screening operations (3, 8) is filtered and washed to separate alkaline and ammonium salts and then subjected to a thermal treatment (29), in that the non-magnetic fraction from the screen overflow (9) of the two screening operations (3, 8), which fraction cannot be comminuted with the respective impact mill used, is fed to the thermal treatment (29), and in that the magnetic fraction (12, 17) of the screen overflow (9) of the second screening operation (8) is treated separately.

2. A process according to Claim 1, characterised in that the screen overflow (9) of the second screening operation (8) is fed initially to a first magnetic separation (10), whereupon a scrap fraction (12) is separated, and then to a second magnetic separation (11) so as to separate a magnetic fraction which cannot be comminuted with the respective impact mill (7) used.

3. A process according to Claim 1 or 2, characterised in that the respective initial magnetic separation is carried out using top-mounted magnetic separators (5, 10) and the respective second magnetic separation is carried out using drum-type magnetic separators (6, 11).

4. A process according to Claim 1, 2 or 3, characterised in that from the screen overflow (4) of the first screening operation (3) only the magnetically separable portion of the second magnetic separation (6) is fed to the second mill passage (7).

5. A process according to any one of Claims 1 to 4, characterised in that the screening operation (3, 8) is carried out on the material which has passed through the secreen so as to a separate a grain size of <5 mm.

6. A process according to any one of Claims 1 to 5, characterised in that the magnetic fraction of the screen overflow (9), which fraction is not separated by an initial magnetic separation (10), undergoes the second screening operation (8) of an impeller breaker (18) and, subsequently, a third mill passage through an impact mill (19), whereupon, optionally after a thermal treatment (20) at temperatures of at maximum 315°C and a further grinding operation, a further screening operation or a further magnetic separation (22) is carried out and the material (24) which has passed through the screen and/or the non-magnetic fraction is fed to the material (25) which has passed through the initial and second screening operations (3, 8) so as to separate alkaline and ammonium salts.

7. A process according to any one of Claims 1 to 6, characterised in that a scrap fraction (12) undergoes a thermal decomposition in a cylindrical rotary kiln (13) at temperatures of between 500° and 900°C, in particular 700°C, in which mercury and zinc are separated, whereupon, optionally after grinding (14), screening or magnetic separation (15), a mercury-free scrap is delivered.

8. A process according to any one of Claims 1 to 7, characterised in that the fraction freed of alkaline and ammonium salts and with a maximum grain size of 5 mm is fed, optionally after preliminary drying (27) at temperatures of between 105° and 130°C, to a cylindrical rotary kiln (28) for thermal treatment at 500 to 900°C in an oxidising atmosphere, whereupon, optionally after subsequent burning of the pyrolysis gases, dust separation (30) is carried out at a temperature above 357°C and, subsequently, mercury is condensed from the gaseous phase by cooling (32).

9. A process according to any one of Claims 1 to 8, characterised in that the pre-dried, fine-grained material, optionally after thermal treatment (29) in an oxidising atmosphere and with the addition of dust discharged from this thermal treatment, is pelletised and/or granulated and is subjected to a second thermal treatment (34) in a reducing atmosphere, particularly with the addition of coke, at temperatures of between 1000° and 1250°C, in which zinc and, optionally, mercury are separated.

10. A process according to Claim 9, characterised in that the charge to be fed to the second thermal treatment (34) is modified by adding CaO *so as to attain* a ratio of $CaO+MgO/SiO_2$ of from 1.3 to 3, taking into account the $SiO_2$ content of the additional coke.

11. A process according to Claims 9 and 10, characterised in that, after the second thermal treatment (34), cooling takes place in inert gas and, optionally, after screening and comminution (42) to grain sizes of at maximum 0.3 mm, the treated material is fed to a magnetic separation (43).

12. A process according to Claim 11, characterised in that the magnetically non-separable substance is brought into a neutral or weakly acid solution and is then filtered.

13. A process according to any one of Claims 1 to 12, characterised in that remaining Mn oxide is dissolved with $H_2SO_4$ and this solution is separated from undissolved constituents, such as $CaSO_4$, $SiO_2$ and carbon.